(19) **Europäisches Patentamt European Patent Office Office européen des brevets**

(11) **EP 1 844 312 B1**

(12) **FASCICULE DE BREVET EUROPEEN**

(45) Date de publication et mention de la délivrance du brevet:
**07.09.2011 Bulletin 2011/36**

(21) Numéro de dépôt: **05826007.6**

(22) Date de dépôt: **09.12.2005**

(51) Int Cl.:
*G01N 11/04* (2006.01)

(86) Numéro de dépôt international:
**PCT/FR2005/003094**

(87) Numéro de publication internationale:
**WO 2006/061524 (15.06.2006 Gazette 2006/24)**

(54) **PROCEDE ET INSTALLATION DE DETERMINATION DE CARACTERISTIQUES RHEOLOGIQUES D'UN FLUIDE, ET PROCEDE D'IDENTIFICATION CORRESPONDANT**

VERFAHREN UND INSTALLATION ZUR BESTIMMUNG DER RHEOLOGISCHEN EIGENSCHAFTEN EINES FLUIDS SOWIE ENTSPRECHENDES IDENTIFIZIERUNGSVERFAHREN

METHOD AND INSTALLATION FOR DETERMINING RHEOLOGICAL CHARACTERISTICS OF A FLUID, AND CORRESPONDING IDENTIFYING METHOD

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **10.12.2004 FR 0413191**

(43) Date de publication de la demande:
**17.10.2007 Bulletin 2007/42**

(73) Titulaires:
 • **RHODIA CHIMIE**
 **93300 Aubervilliers (FR)**
 • **Centre National de la Recherche Scientifique**
 **75016 Paris (FR)**

(72) Inventeurs:
 • **COLIN, Annie**
 **F-33000 Bordeaux (FR)**
 • **CRISTOBAL, Galder**
 **F-33000 Bordeaux (FR)**
 • **GUILLOT, Pierre**
 **F-38920 Crolles (FR)**
 • **JOANICOT, Mathieu**
 **F-92290 Chatenay Malabry (FR)**

(74) Mandataire: **Schouller, Jean-Philippe et al**
 **Cabinet Lavoix**
 **62, rue de Bonnel**
 **69448 Lyon Cedex 03 (FR)**

(56) Documents cités:
 **WO-A-02/39090     WO-A-03/008936**
 **US-A- 3 808 877    US-A- 5 327 778**
 **US-A- 5 447 440**

## Description

La présente invention concerne un procédé et une installation de détermination de caractéristiques rhéologiques d'un fluide, ainsi qu'un procédé d'identification faisant appel à ce procédé et/ou à cette installation.

Il existe un grand nombre de fluides, que se propose de traiter l'invention, qui sont rencontrés dans la vie quotidienne. A titre purement indicatif, on citera notamment les mousses, les émulsions comme la mayonnaise, ou encore les phases de tensio-actifs concentrés comme les shampooings. Ces fluides sont généralement obtenus par mélange de différents composants, qui sont par exemple de l'huile, de l'eau, des tensio-actifs, des polymères ou encore des alcools.

Dans ces conditions, l'ingénieur formulateur doit mettre au point une formule qui est active, par exemple lavante dans le cas d'un shampooing, mais qui est également stable dans le temps, facilement manipulable et qui possède une texture agréable pour le consommateur. A cet effet, il est nécessaire de maîtriser les propriétés rhéologiques de ces formulations, afin d'être capable de les ajuster. En effet, ces propriétés sont d'une grande importance, étant donné qu'elles présentent des répercutions directes sur les procédés de fabrication, de pompage et de mélange des fluides considérés.

Comme cela est bien connu, dans le cas d'un fluide simple, tel que de l'eau, la viscosité est indépendante du taux de cisaillement appliqué sur ce fluide. Ce dernier est donc dit newtonien.

Il en va autrement pour ce qui est de fluides complexes, qui sont caractérisés par l'existence d'une échelle de taille intermédiaire, comprise entre la taille de la molécule et la taille de l'échantillon. Cette échelle de taille est, par exemple, la taille des gouttes dans une émulsion, ou encore la taille des bulles dans une mousse.

Ces fluides complexes, qui sont dits non newtoniens, possèdent une viscosité susceptible de varier, lorsqu'on augmente la contrainte appliquée. La réponse rhéologique de ces fluides n'est donc pas un coefficient unique de viscosité, mais une courbe de réponse appelée courbe d'écoulement. Cette dernière représente l'évolution de la contrainte en fonction du taux de cisaillement, la pente locale de cette courbe étant la viscosité correspondant au taux de cisaillement considéré.

Pour ajuster la viscosité d'une formulation, il est habituel d'ajouter des épaississants, qui sont par exemple des solutions de polymère ou des sels, ou encore des agents gélifiants, qui sont par exemple des polymères ou des protéines. Afin de déterminer précisément cette valeur de viscosité, différents mélanges de composition variables sont habituellement préparés. Leurs propriétés mécaniques sont ensuite mesurées en utilisant un appareil approprié, connu sous le nom de rhéomètre.

Un tel rhéomètre est par exemple commercialisé par la société TA INSTRUMENTS, sous la référence commerciale AR 1 000 N. Il comprend deux cylindres coaxiaux, définissant un espace intermédiaire dans lequel est introduit le fluide, dont on désire déterminer les propriétés rhéologiques.

Un couple mécanique est alors appliqué sur le cylindre intérieur par l'intermédiaire d'un moteur. Dans ces conditions, il s'agit de mesurer la vitesse de rotation de l'axe du moteur, étant entendu que, plus cette vitesse est élevée, moins le fluide considéré est visqueux.

La mise en oeuvre de ce rhéomètre implique cependant certains inconvénients.

Tout d'abord, elle induit une consommation élevée de fluides, puisque chaque mesure fait intervenir une quantité non négligeable de composants, comprise typiquement entre 5 et 30 cm$^3$. Par ailleurs, ce rhéomètre est d'une manipulation relativement fastidieuse, puisque chaque mesure s'accompagne d'une préparation correspondante de l'échantillon à tester.

Par ailleurs, de manière générale, il existe un besoin constant de l'industrie de développer des produits nouveaux, présentant des propriétés nouvelles, par exemple de nouveaux composés chimiques ou de nouvelles compositions comprenant des nouveaux produits chimiques et/ou de nouvelles associations de produits chimiques. La rhéologie des produits est une propriété importante pour bon nombre d'applications, qu'il convient bien souvent de tester dans les processus de Recherche et Développement. Il existe un besoin en procédés et installations pour accélérer les processus de Recherche et Développement, par exemple pour tester un plus grand nombre de produits et/ou pour mettre en oeuvre les tests sur de plus petites quantités de produits, et/ou pour mettre en oeuvre les tests de manière plus rapide.

US-A-5 327 778, qui peut être considéré comme étant l'état de la technique le plus proche de la présente invention, décrit un procédé et une installation de détermination de caractéristiques rhéologiques d'un fluide inconnu. Cette installation comprend un viscosimètre à aiguille, dans lequel une aiguille plonge dans un liquide dont on désire déterminer la viscosité. A l'aide de cette aiguille, on fait tomber un corps de densité connue, le temps nécessaire à la chute de ce corps permettant de remonter à la viscosité et au taux de cisaillement, à l'aide d'un modèle mathématique.

WO-A-03/008936 décrit une mesure de viscosité d'un fluide non newtonien, ce fluide étant placé dans un tube exposé à une pression différentielle, dont la valeur décroît continûment.

US-A-5 447 440 divulgue un appareil permettant de réaliser des mesures de changement de viscosité d'un fluide. Pour ce faire, un réactif est mis en contact avec un échantillon de fluide, induisant un changement de viscosité de ce dernier, détecté par un capteur ad hoc.

WO-A-02/39090 traite de l'étude d'un écoulement fluidique, au sein d'un tube présentant une forme de U. L'enseignement de ce document est à rapprocher de celui du document précité WO-A-03/008936.

US-A-3 808 877 décrit un procédé de mesure de la viscosité d'un liquide, dans lequel ce dernier est amené à s'écouler dans un tube capillaire.

Ceci étant précisé, l'invention vise à remédier aux différents inconvénients de l'art antérieur évoqués ci-dessus et/ou à répondre au besoin mentionné ci-dessus.

Elle vise en particulier à mettre en oeuvre un procédé permettant de déterminer les caractéristiques rhéologiques d'un fluide, moyennant l'utilisation d'une quantité très faible de ce fluide. Elle vise notamment un tel procédé, qui permet d'accéder aux mêmes propriétés qu'un rhéomètre de l'état de la technique.

L'invention vise également à proposer une installation permettant la mise en oeuvre de ce procédé, qui est compacte et de structure simple, tout en faisant appel à un nombre restreint d'appareils extérieurs.

A cet effet, elle a pour objet un procédé de détermination de caractéristiques rhéologiques d'un fluide inconnu, comprenant les étapes suivantes :

- on fait s'écouler en parallèle, dans un microcanal d'écoulement, un fluide étalon, dont les caractéristiques rhéologiques sont connues, ainsi que ledit fluide inconnu, dont les caractéristiques rhéologiques sont à déterminer ;
- on identifie au moins une donnée représentative d'une interface entre ces deux fluides, dans ledit écoulement parallèle ; et
- on détermine les caractéristiques rhéologiques du fluide inconnu, à partir de la ou de chaque donnée identifiée.

L'invention a également pour objet une installation pour la mise en oeuvre du procédé tel que défini ci-dessus, comprenant un dispositif de détermination des caractéristiques rhéologiques du fluide inconnu, ce dispositif de détermination comportant :

- un corps, formant notamment une plaquette ;
- un microcanal d'écoulement, ménagé dans le corps, propre à recevoir l'écoulement parallèle du fluide inconnu et du fluide étalon ;
- des moyens d'introduction de ces deux fluides dans le microcanal d'écoulement ;
- des moyens d'identification d'au moins une donnée représentative de l'interface entre ces deux fluides, dans l'écoulement parallèle ; et
- des moyens de détermination des caractéristiques rhéologiques du fluide inconnu, à partir de la ou de chaque donnée identifiée.

L'invention a enfin pour objet un procédé d'identification de composés chimiques, d'associations de composés chimiques ou de compositions présentant notamment des propriétés rhéologiques intéressantes, comprenant les étapes suivantes :

a) préparer au moins deux produits, associations ou compositions, différents,
b) mesurer au moins une caractéristique rhéologique par le procédé tel que défini ci-dessus, et/ou à l'aide de l'installation telle que définie ci-dessus,
c) identifier un produit, une association ou une composition présentant une propriété rhéologique intéressante.

L'invention va être décrite ci-après, en référence aux dessins annexés, donnés uniquement à titre d'exemples non limitatifs, dans lesquels :

- la figure 1 est une vue de face, illustrant de façon schématique une installation de détermination des caractéristiques rhéologiques d'un fluide, qui est conforme à l'invention ;
- la figure 1A est une vue de face agrandie, illustrant plus particulièrement une zone de jonction appartenant à l'installation de la figure 1 ;
- la figure 2 est une vue de face, à grande échelle, illustrant un écoulement parallèle de deux fluides dans une région de l'installation de la figure 1 ;
- la figure 3 est un graphe, illustrant le champ de vitesses de deux fluides s'écoulant dans l'installation de la figure 1, lors de la mise en oeuvre d'une variante de réalisation de l'invention ;
- la figure 4 est une vue de face, à grande échelle, analogue à la figure 2, illustrant l'écoulement de deux fluides lors de la mise en oeuvre de la variante correspondant à la figure 3 ;
- les figures 5A et 5B sont des vues de face, à grande échelle, analogues aux figures 2 et 4, illustrant la mesure du champ de vitesses de deux fluides s'écoulant dans l'installation de l'invention ;

- la figure 6 est un graphe, analogue à la figure 3, illustrant le champ de vitesses des deux fluides, mesuré selon l'étape illustrée aux figures 5A et 5B ; et
- les figures 7 à 14 sont des graphes, illustrant les résultats des exemples 1 à 8 de mise en oeuvre d'un procédé conforme à l'invention, permettant de déterminer des caractéristiques rhéologiques d'un fluide.

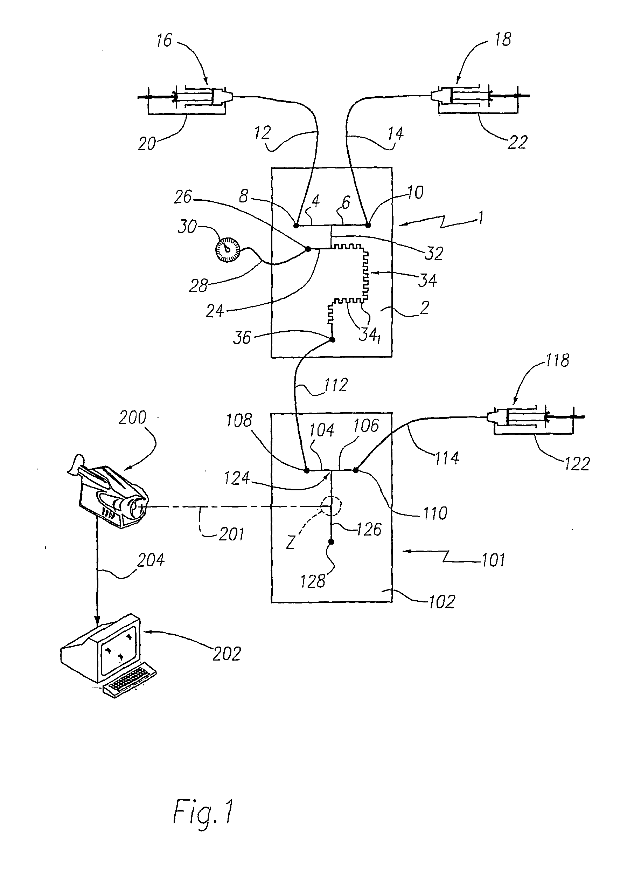

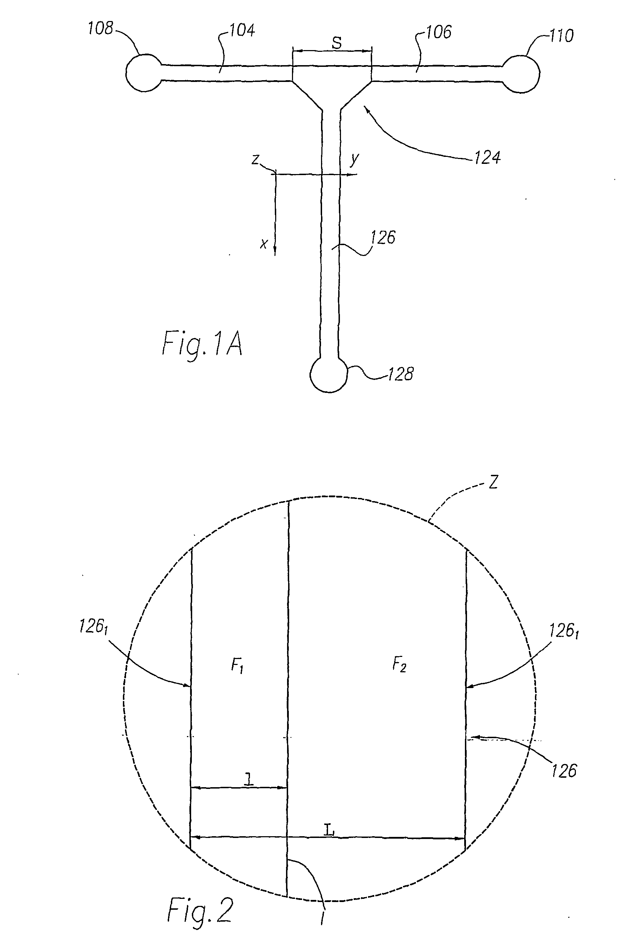

L'installation conforme à l'invention, qui est représentée sur la figure 1, comporte tout d'abord un dispositif de mélange, désigné dans son ensemble par la référence 1. Ce dernier comprend un corps 2, formant plaquette, qui peut être réalisée de façon connue en soi en poly(diméthylsiloxane), ou PDMS.

Cette plaquette 2 possède une longueur typique de 60 mm, une largeur typique de 40 mm, ainsi qu'une épaisseur typique de 4 mm. Elle est gravée de différents microcanaux, selon des procédures classiques de l'état de la technique. De façon connue en soi, une plaquette de verre non représentée est rapportée, par exemple par collage, au-dessus de la plaquette 2 en PDMS, de manière à obturer la face supérieure de ces microcanaux.

La dimension caractéristique de ces microcanaux, telle que visée par l'invention, est comprise entre la dizaine de micromètres et le millimètre. De manière typique, cette dimension provoque un écoulement sensiblement laminaire au sein de ces microcanaux, avec un nombre de Reynolds inférieurs à 1. A titre indicatif, en vue d'illustrer la réalisation et les propriétés de ces microcanaux, on citera l'ouvrage de Stéphane COLIN, Microfluidique (Traité EGEM série Microsystèmes), aux éditions Hermès Science Publications.

De façon plus précise, il est tout d'abord prévu deux microcanaux 4 et 6 d'amenée de deux composants, qui s'étendent horizontalement sur la figure 1. Chaque microcanal est associé à une entrée 8 et 10, propre à recevoir une première extrémité d'un tube 12 ou 14, dont l'autre extrémité est reliée à une seringue 16 ou 18. Le débit du composant administré par chaque seringue est par ailleurs contrôlé grâce à un pousse-seringue 20 ou 22.

La plaquette 2 est en outre creusée d'un microcanal 24, permettant l'amenée d'un gaz, qui est par exemple de l'air. De façon analogue à ce qui a été décrit ci-dessus, ce microcanal 24 est associé à une entrée 26, à un tube 28, ainsi qu'à un manomètre 30. Les différents organes mécaniques 8 à 22, ainsi que 26 à 30, qui sont de type connu en soi, ne seront pas décrits plus en détail dans ce qui suit.

Les deux microcanaux 4 et 6 se rejoignent tout d'abord en un microcanal intermédiaire 32, vertical sur la figure 1, qui est lui-même mis en communication avec le microcanal 24. En aval de cette zone de jonction, il est ainsi formé un microcanal 34, dit de mélange. On notera que ce microcanal 34 est pourvu d'une succession de replis $34_1$, formant lacets, dont les parois constituent des obstacles permettant de mélanger les composants, comme on le verra plus en détail dans ce qui suit. L'extrémité aval du microcanal de mélange 34 débouche dans une sortie 36.

L'installation de la figure 1 comprend, outre le dispositif de mélange 1, un dispositif supplémentaire 101, permettant la détermination de caractéristiques rhéologiques d'un fluide, comme on le verra plus loin. Ce dispositif de détermination 101 comprend tout d'abord une plaquette 102, analogue à celle 2 évoquée ci-dessus, dans laquelle sont gravés différents microcanaux, comme on va le voir dans ce qui suit. Comme dans le cas du dispositif de mélange 1, la plaquette 102 en PDMS est associée à une plaquette de verre non représentée, permettant d'obturer la partie supérieure de ces microcanaux.

Cette plaquette 102 comprend tout d'abord un premier microcanal 104, dit amont, qui s'étend horizontalement sur la figure 1. Ce microcanal 104 est associé à une entrée 108, qui est mise en communication avec la sortie 36 du dispositif de mélange 1, par l'intermédiaire d'un tube 112.

Il est par ailleurs prévu un second microcanal amont 106, également horizontal, qui est associé à une entrée 110. Cette dernière est mise en communication, via un tube 114, avec une seringue 118 dont le débit est contrôlé par un pousse-seringue 122.

On notera qu'il peut être prévu plusieurs seringues supplémentaires, associées à des pousse-seringues correspondants, permettant de délivrer d'autres types de fluides dans l'entrée 110, par l'intermédiaire du tube 114. Le passage entre ces différentes seringues peut à cet égard s'opérer de façon automatique. Le pilotage est assuré par un ordinateur, de manière connue en soi.

Les deux microcanaux amont 104 et 106 se rejoignent en une zone de jonction 124, en forme d'entonnoir, qui est plus particulièrement visible sur la figure 1A. De façon plus précise, la section transversale S de cette zone 124 diminue vers l'aval, à savoir à l'opposé des deux microcanaux précités 104 et 106.

Cette zone de jonction 124 communique avec un microcanal 126, vertical sur la figure 1, qui est dénommé d'écoulement. Ce dernier est mis en communication, à son extrémité aval, avec une sortie 128, qui est par exemple associée à un tube non représenté permettant l'évacuation des effluents.

Conformément à l'invention, la section de passage des différents microcanaux 4, 6, 24, 32, 34, 104, 106 et 126 est avantageusement comprise entre 20 et 500 micromètres, de préférence entre 50 et 200 micromètres.

L'installation de l'invention est par ailleurs pourvue d'une caméra 200, reliée à un ordinateur 202 par l'intermédiaire d'une ligne 204. De façon connue en soi, cette caméra 200 est associée à un microscope, de sorte que son faisceau 201 est propre à visualiser une zone du microcanal d'écoulement 126. Cette zone, dite de visualisation, est représentée en traits pointillés sur la figure 1, en y étant affectée de la référence Z.

La mise en oeuvre de l'installation de la figure 1, décrite ci-dessus, va maintenant être explicitée dans ce qui suit.

Conformément à l'invention, on désire déterminer des caractéristiques rhéologiques d'un fluide, dit inconnu, notamment par l'intermédiaire d'une lecture optique de la zone de visualisation Z. A cet effet, ce fluide inconnu est tout d'abord préparé par mélange de deux composants, dans le dispositif de mélange 1.

Les deux composants circulent dans les microcanaux 4 et 6, selon des débits contrôlés par les pousse-seringues 20 et 22. A cet égard, une gamme typique de débits est par exemple de 1 microlitre par heure à 100 millilitres par minute.

Puis, ces deux composants circulent dans le microcanal intermédiaire 32, selon un écoulement globalement parallèle. Il est à noter que, dans ce microcanal 32, il n'existe sensiblement aucun mélange entre ces deux composants, étant donné la nature même de ces microcanaux, en particulier leur très faible section.

Par ailleurs, on fait circuler de l'air dans le microcanal 24, de manière à créer des bulles gazeuses. Ces dernières engendrent des perturbations dans l'écoulement parallèle des deux composants, dans le microcanal de mélange 34. Ces perturbations sont d'autant plus importantes que ce microcanal 34 est pourvu de replis $34_1$, qui génèrent des chocs dans l'écoulement précité.

Par conséquent, à la sortie 36, on dispose d'un fluide bien mélangé, dont la composition est parfaitement déterminée, grâce à la connaissance des débits respectifs des composants délivrés par les microcanaux 4 et 6. A cet égard, il est à souligner que la composition de ce fluide inconnu peut être modifiée de manière très simple, moyennant une simple variation des débits précités, délivrés dans les microcanaux 4 et 6.

On remarquera également que l'utilisation d'air, associé à du PDMS, est avantageuse. En effet, étant donné que ce matériau est poreux à l'air, la taille des bulles tend à diminuer, au fur et à mesure de leur avancée dans le microcanal de mélange 34, de sorte que l'air s'échappe progressivement au travers de la membrane de PDMS.

Ainsi, en ajustant convenablement le débit d'air et la longueur de ce microcanal, il est possible d'obtenir un fluide qui est parfaitement mélangé, tout en étant sensiblement dépourvu de bulles d'air. Par conséquent, la détermination postérieure des caractéristiques rhéologiques de ce fluide ne sera pas perturbée, du fait d'une présence éventuelle de gaz.

A titre de variante, on peut associer un gaz de mélange et un matériau constitutif de la plaquette, qui sont différents de l'air et du PDMS. A titre d'exemple non limitatif, on citera l'hélium, l'azote ou encore l'argon.

A titre de variante non représentée, le nombre de composants à mélanger, afin d'obtenir le fluide inconnu, peut être supérieur à 2. Dans cette optique, la procédure de mélange décrite ci-dessus est recommencée avec un composant supplémentaire, soit à l'entrée, soit à la sortie du microcanal de mélange.

On notera également que le dispositif de mélange 1 peut être différent d'un mélangeur à bulles. Dans ce cas, il peut s'agir de tout autre dispositif favorisant, de manière connue, l'augmentation de la zone de contact entre des fluides miscibles. On citera notamment, à titre non limitatif, la présence de chevrons dans les canaux, ou encore la création de pulsations dans les écoulements.

Le fluide inconnu, préparé dans le dispositif de mélange 1, est alors admis à l'entrée 108 du microcanal 104, par l'intermédiaire du tube 112. Par ailleurs, on fait circuler un fluide étalon, dont les caractéristiques rhéologiques sont parfaitement connues, dans l'autre microcanal amont 106. Ces deux fluides, respectivement inconnus et étalon, s'écoulent alors dans le microcanal 126.

Comme on l'a vu ci-dessus, l'écoulement au sein d'un microcanal est essentiellement de type laminaire. Dans ces conditions, les deux fluides précités vont s'écouler en parallèle au sein de ce microcanal 126. Il est cependant avantageux de prendre certaines mesures, afin de préserver la nature parallèle de cet écoulement.

A cet effet, dans le cas de fluides miscibles, la géométrie en entonnoir de la zone de jonction 124 est avantageuse. De plus, il est possible d'ajouter des tensio-actifs dans la fluide étalon, ce qui favorise le caractère parallèle de cet écoulement, sans cependant modifier la composition du fluide inconnu.

On va tout d'abord décrire un premier mode de réalisation de l'invention, en vue de déterminer les caractéristiques rhéologiques du fluide inconnu.

Pour ce faire, on visualise la zone Z du microcanal 126, au moyen de la caméra 200, comme cela est matérialisé à la figure 2. Sur cette dernière, on retrouve une partie du microcanal d'écoulement 126, dont les parois sont affectées de la référence $126_1$. On affecte par ailleurs des références respectives $F_1$ et $F_2$ les fluides respectivement inconnu et étalon. Enfin, on note I l'interface entre ces deux fluides, dont on rappellera qu'ils progressent selon un écoulement parallèle.

Il s'agit alors de mesurer la largeur, notée 1, de l'écoulement du fluide inconnu $F_1$. On note par ailleurs L la largeur totale du microcanal 126, au niveau de la zone de visualisation Z.

Dans le cas où le fluide inconnu est newtonien, à savoir que sa viscosité est indépendante du taux de cisaillement appliqué, on tire parti des équations suivantes.

On note tout d'abord x l'axe principal du canal, et y et z ses axes transversaux (voir figure 1A). En d'autres termes, y correspond à la largeur du canal, et z à sa profondeur, (x, y, z) formant un repère orthonormé.

Lorsqu'un écoulement parallèle existe, le champ de vitesses possède uniquement une selon l'axe x du canal. Dans ces conditions, le vecteur vitesse s'écrit :

$$\vec{v}_i \quad = u_i(x, y, z) \; \vec{e}_x.$$

Dans l'équation ci-dessus, ainsi que dans celles qui vont suivre, l'indice i affecte les valeurs 1 et 2, correspondant respectivement au fluide inconnu et au fluide étalon.

L'incompressibilité des fluides entraîne l'équation (1) suivante:

$$(1) \qquad \frac{\partial u}{\partial x}(x,y,z)=0$$

Les équations de Navier Stokes $(2_1)$, $(2_2)$ et $(2_3)$ s'écrivent comme suit :

$$(2_1) \qquad \frac{\partial P_i(x,y,z)}{\partial x}=\eta_i\left(\frac{\partial^2 u(y,z)}{\partial^2 y}+\frac{\partial^2 u(y,z)}{\partial^2 z}\right)$$

$$(2_2) \qquad \frac{\partial P_i(x,y,z)}{\partial y}=0$$

$$(2_3) \qquad \frac{\partial P_i(x,y,z)}{\partial z}=0$$

Etant donné que le champ de vitesses a uniquement une composante axiale selon x, on peut écrire l'équation (3)

$$(3) \qquad P_i(x,y,z)=(P_{i-sortie}*x=P_{i-entrée}*(L-x))/L$$

Dans les équations (2) et (3) ci-dessus, $P_i$ désigne la pression pour chaque fluide, de sorte que la dérivée de cette pression correspond à la perte de charge, selon l'une des directions x, y ou z. De plus, dans les équations (2), $\eta$ désigne la viscosité.

Soit $Q_i$ le débit de chaque fluide, on peut écrire que ce débit est fonction de la vitesse, selon l'équation (4) ci-dessous :

$$(4) \qquad Q_i=\oint u_i(y,z)dydz$$

On écrit également l'équation (5) relative à la continuité de la vitesse à l'interface I, entre les deux fluides :

$$(5) \qquad u_1=u_2$$

Enfin, on écrit l'équation (6) relative à la continuité des forces appliquées à l'interface I :

$$(6) \qquad \eta_1\gamma_1=\eta_2\gamma_2$$

où $\gamma_i$ correspond au taux de cisaillement appliqué.

Les six équations (1) à (6) écrites ci-dessus s'apparentent à un système de six équations à six inconnues, que l'invention se propose de résoudre de manière numérique.

A cet effet, il s'agit tout d'abord de réaliser une phase d'acquisition de l'ordinateur 202, en intégrant dans celui-ci un grand nombre de sextuplets ($\Delta P$, $\eta_1$, $\eta_2$, 1, $Q_1$, $Q_2$) où :

- $\Delta P$ désigne le gradient de pression au niveau de l'endroit des deux fluides s'écoulent en parallèle,
- $\eta_1$ et $\eta_2$ désignent les viscosités des fluides respectivement inconnu et étalon
- l désigne la largeur, évoquée ci-dessus, de l'écoulement du fluide inconnu ; et
- $Q_1$ et $Q_2$ désignent les débits respectifs du fluide inconnu et du fluide étalon.

On rappelle par ailleurs que la viscosité $\eta_2$ du fluide étalon $F_2$, ainsi que les deux débits $Q_1$ et $Q_2$, sont connus.

Dans ces conditions, en mesurant la largeur l grâce à la caméra 200, on accède à la valeur de $\Delta P$, ainsi qu'à la viscosité $\eta_1$ du fluide inconnu, à partir de la phase d'acquisition de l'ordinateur. A titre de variante non représentée, il est possible de mesurer, grâce à la caméra 200, la largeur (L-1) correspondant à l'écoulement du fluide étalon $F_2$, puis d'en déduire l et ensuite $\Delta P$ et $\eta_1$.

On notera que, dans certains cas, l'interface I représenté sur les figures 2, 4, 5A et 5B n'est pas verticale. Ainsi, pour certains fluides non miscibles, l'écoulement peut prendre la forme d'un jet d'un fluide (fluide inconnu ou étalon) dans l'autre (fluide étalon ou inconnu). De même que précédemment, les caractéristiques géométriques de l'écoulement sont mesurées, notamment de façon optique, alors que l'écoulement est analysé grâce au programme numérique.

Dans le cas où le fluide inconnu est non newtonien, c'est-à-dire que sa viscosité dépend du taux de cisaillement appliqué, les équations (2) évoquées ci-dessus ne sont a priori pas valables.

Dans ces conditions, il s'agit d'associer à ce fluide non newtonien la viscosité qu'aurait un fluide newtonien dans les mêmes conditions opératoires, à savoir notamment débit, viscosité du fluide étalon et position de l'interface identiques. De même, il s'agit de définir le cisaillement appliqué sur le fluide non newtonien en moyennant le taux de cisaillement que ressentirait un fluide newtonien dans les mêmes conditions expérimentales.

En pratique, on diminue le rapport entre les débits du fluide inconnu et du fluide étalon, de sorte que la largeur l du fluide inconnu dans le microcanal d'écoulement 126 est réduite. De façon avantageuse, on diminue ce rapport de débits, jusqu'à ce que la largeur l soit comprise entre 5 et 20 %, notamment voisine d'environ 10% de la largeur totale L du microcanal 126.

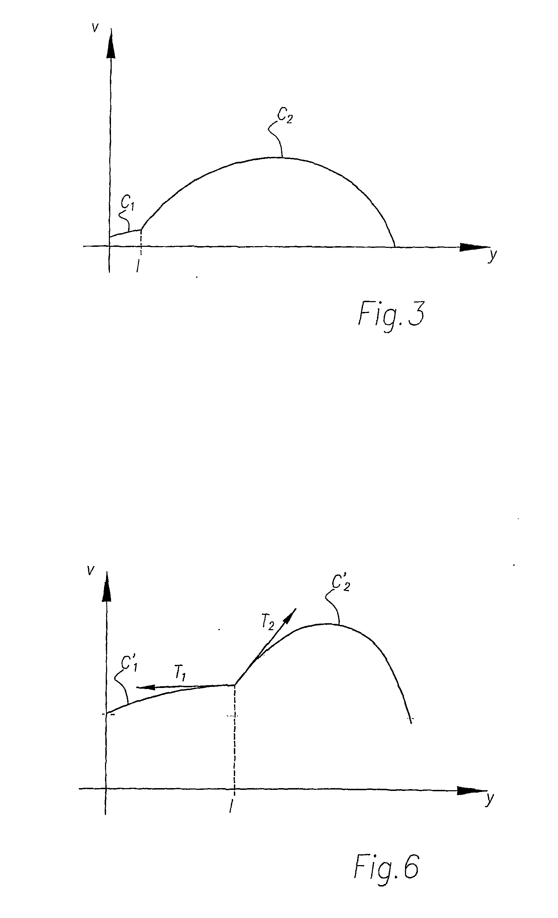

Dans ces conditions, le profil de vitesses des fluides respectivement inconnu et étalon est reproduit sur la figure 3. Sur cette dernière, on retrouve l'évolution de la vitesse v en fonction de la coordonnée transversale, ou largeur y, du microcanal. On constate que le profil de vitesses du fluide inconnu, matérialisé par la portion $C_1$ à gauche de l'interface l, correspond globalement à une droite, la portion $C_2$ correspondant au fluide étalon.

Ce fait est aussi valable dans le cas d'un écoulement en forme de jet, pour un fluide inconnu dont la viscosité est au moins 5 fois supérieure à la viscosité du fluide étalon.

La pente du profil de vitesses du fluide inconnu est donc sensiblement constante, de même que le taux de cisaillement. Par conséquent, la viscosité $\eta_1$ du fluide inconnu, intervenant dans les équations $(2_1)$ à $(2_3)$, est également constante. De la sorte, ces équations peuvent être appliquées.

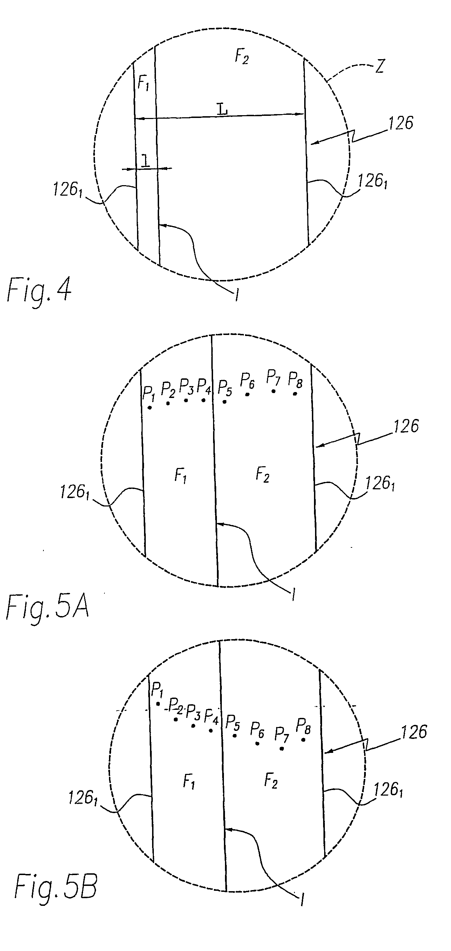

On peut donc déterminer la viscosité du fluide inconnu de la même manière que celle explicitée ci-dessus, dans le cas d'un fluide newtonien. Ainsi, comme le montre la figure 4, on mesure de façon précise la largeur 1, dont on a vu qu'elle était avantageusement inférieure à 20 % de la largeur totale L. Puis, on en déduit la viscosité du fluide inconnu, grâce à la méthode numérique explicitée ci-dessus.

On va maintenant décrire un second mode de réalisation de l'invention, en vue de déterminer les caractéristiques du fluide inconnu. A cet effet, il s'agit tout d'abord de déterminer le champ de vitesses des deux fluides, selon l'axe y du canal, à savoir la largeur de ce dernier. On disperse des particules dans les deux fluides, et on détermine leur vitesse de progression grâce à la caméra 200.

Les particules, qui ont une taille typique comprise entre 1 et 4 micromètres, sont par exemple des billes de latex dans le cas d'une phase aqueuse, ou bien des billes de mélanine dans le cas d'une phase d'huile. Ces particules sont aisément décelables par l'intermédiaire de la caméra 200, du fait de leurs tailles et de leurs indices optiques.

Sur les figures 5A et 5B, on a représenté la zone Z du microcanal 126, de manière analogue à ce qui a été décrit en référence à la figure 2. On retrouve donc les parois $126_1$ de ce microcanal 126, les fluides respectivement inconnus $F_1$ et $F_2$, ainsi que l'interface I entre ces deux fluides. Dans un but de clarté de l'explication, on suppose qu'on a dispersé huit particules $P_1$ à $P_8$, à savoir quatre dans chaque fluide, étant entendu que le nombre de particules utilisées en pratique est nettement plus élevé.

Les figures 5A et 5B, qui correspondent à des temps d'observation différents, permettent de visualiser le déplacement des particules précitées. La vitesse correspondante de ces particules est donc égale au rapport entre la valeur du déplacement de chaque particule et le temps t séparant les deux prises de vues. On notera que, dans l'exemple considéré, les particules $P_6$ et $P_7$ présentent une vitesse maximale, alors que les particules $P_1$ et $P_8$ présentent une vitesse minimale.

Dans ces conditions, on accède au profil de vitesses des deux fluides, selon l'axe y, qui est matérialisé sur la figure 6. On retrouve donc en abscisses la coordonnée y, en ordonnées la vitesse v, ainsi que la position de l'interface I. Les portions C'$_1$ et C'$_2$ sont relatives respectivement au fluide inconnu F$_1$ et au fluide étalon F$_2$.

Il s'agit alors de tirer parti de l'équation (6) évoquée ci-dessus, relative à la continuité des forces appliquées à l'interface I, dont on rappelle qu'elle s'écrit :

$$(6) \qquad \eta_1 \gamma_1 \ = \ \eta_2 \gamma_2$$

On détermine alors de manière numérique, comme illustré sur la figure 6, les tangentes à la courbe, notées T$_1$ et T$_2$, de part et d'autre de l'interface I. Ceci permet alors d'accéder aux deux taux de cisaillement $\gamma_1$ et $\gamma_2$, et donc d'en déduire la viscosité $\eta_1$ du fluide inconnu, étant donné que la viscosité $\eta_2$ du fluide étalon est connue au préalable.

Les deux modes de réalisation décrits ci-dessus permettent d'accéder à la viscosité du fluide inconnu. Il doit être souligné que l'invention permet aussi d'accéder à la courbe d'écoulement de ce fluide inconnu, en particulier dans le cas où ce dernier est non newtonien, en modifiant la valeur du taux de cisaillement.

Pour ce faire, il est tout d'abord possible de modifier au moins un paramètre relatif à l'écoulement d'au moins le fluide inconnu et, le cas échéant, du fluide étalon. Ce paramètre peut être le débit, mais aussi la pression. Dans ces conditions, l'augmentation du débit entraîne une variation correspondante du taux de cisaillement.

Par ailleurs, dans le cas du second mode de réalisation, décrit en référence aux figures 5 et 6, il est également possible de modifier le lieu où est mesuré le champ de vitesses. Ceci revient donc, en pratique, à modifier la valeur de la profondeur z du canal, à laquelle se trouve réalisée cette mesure. Ainsi, plus cette mesure est mise en oeuvre au voisinage du fond du canal, et plus le taux de cisaillement est faible. En revanche, au fur et à mesure que l'on s'éloigne de ce fond du microcanal, le taux de cisaillement tend à augmenter.

L'invention permet de réaliser les objectifs précédemment mentionnés. En effet, l'invention permet de déterminer, de façon simple, les caractéristiques rhéologiques d'un fluide, moyennant l'utilisation d'une quantité très faible de ce dernier. Par ailleurs, l'installation de l'invention implique un nombre de manipulations qui est très sensiblement réduit par rapport à l'art antérieur, formé par le rhéomètre.

De plus, l'utilisation de microcanaux permet de faire varier, de manière très simple, la composition du fluide inconnu, moyennant une variation des débits des composants de ce fluide inconnu. On notera également que l'installation de l'invention est d'un encombrement général bien plus faible que celui d'un rhéomètre, tel que connu de l'état de la technique.

Il est également à souligner que l'invention autorise une connaissance approfondie du comportement rhéologique du fluide qu'elle se propose d'étudier. Ainsi, l'invention permet d'accéder non seulement à la viscosité, mais également à la courbe d'écoulement de ce fluide. Dans ces conditions, l'installation conforme à l'invention possède des performances analogues à celles d'un rhéomètre et bien supérieures à celles d'un viscosimètre, en particulier dans la mesure où elle autorise l'étude de fluides complexes.

L'utilisation de moyens optiques est également avantageuse. En effet, ceci confère une grande simplicité à l'installation de l'invention.

D'autres techniques peuvent aussi être utilisées pour mesurer les caractéristiques de l'interface, telles que par exemple la conductivité électrique.

Enfin, faire appel à des fluides respectivement inconnus et étalon, qui ne sont pas miscibles, est également avantageux. En effet, ceci permet d'augmenter la précision de l'opération, visant à déterminer les caractéristiques rhéologiques du fluide inconnu. Par comparaison, des fluides miscibles ont tendance. à se mélanger par diffusion, de sorte que la mesure de la viscosité est ainsi faussée.

Différents exemples de mise en oeuvre de l'invention vont maintenant être décrits dans ce qui suit. Ces différents exemples font uniquement appel au dispositif de détermination 101, sans utiliser le dispositif de mélange 1.

On supposera que les microcanaux 104, 106 et 126 présentent une section d'environ 100 micromètres. De plus, la longueur des microcanaux amont 104 et 106 est voisine de 4 mm, alors que la longueur du microcanal d'écoulement 126 est d'environ 20 mm. Enfin, la zone de jonction 124 présente une forme de cône, d'angle au sommet d'environ 30°, dont la section transversale S est égale à environ 400 micromètres au niveau du raccordement avec les microcanaux 104 et 106.

EXEMPLE 1

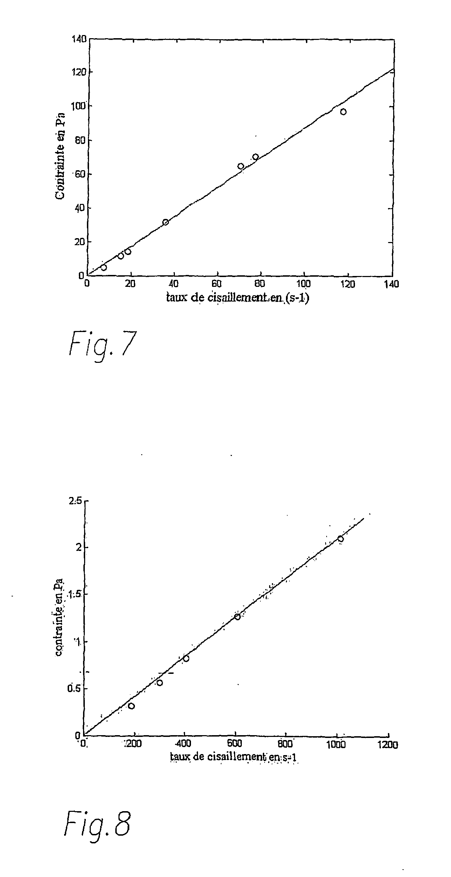

Le fluide inconnu est du glycérol, alors que le fluide étalon est de l'eau, l'expérience étant réalisée à 25°C. Afin de tracer la courbe d'écoulement, le débit du glycérol varie de 1 microlitre par heure à 10000 microlitres par heure, alors que celui de l'eau varie de 1 microlitre par heure à 10000 microlitres par heure. Pour chaque valeur, la largeur 1 de l'écoulement du glycerol a été mesurée. Ceci permet d'accéder à la courbe reproduite sur la figure 7 ci-après, représentant l'évolution de la contrainte en fonction du taux de cisaillement.

Cette courbe permet de vérifier le comportement newtonien du glycerol, à savoir l'évolution linéaire de la contrainte avec le cisaillement. Le coefficient directeur de cette droite permet d'accéder à la viscosité, qui présente une valeur expérimentale de 877cP, ce qui est à comparer avec la valeur théorique de 890cP, soit moins de 2% d'erreur.

EXEMPLE 2

Le fluide inconnu est de l'hexadécane, alors que le fluide étalon est de l'eau. Etant donné que ces deux fluides ne sont pas miscibles, du SDS (sodium dodécyl sulfate) a été ajouté à l'eau à la concentration micellaire critique. L'ajout de ce tensio-actif permet de favoriser l'écoulement en parallèle de l'eau et de l'héxadécane.

L'hexadécane a été admis dans le dispositif 101 à un débit variant entre 1 microlitre par heure et 10000 microlitres par heure, alors que l'eau a été admise à un débit compris variant entre 1 microlitre par heure et 10000 microlitres par heure. La position de l'interface I, à savoir la largeur _l_ de l'écoulement de l'hexadécane, a été mesurée pour chaque valeur de débit. Ceci permet d'accéder à la courbe d'écoulement de l'hexadécane à 25°C, qui est reproduite sur la figure 8 ci-après.

Comme dans le cas du glycérol, cette courbe expérimentale illustre de manière satisfaisante le comportement newtonien de l'hexadécane. La viscosité mesurée est de 2.lcP, qui est en bon accord avec les données théoriques comprises entre 2.2 et 2.3cP.

EXEMPLE 3

On prépare des solutions de micelles géantes, qui forment un fluide non newtonien inconnu. Cette solution, notée micelles 1, est du CpCl-NaSal à 6%. On fait par ailleurs appel à deux fluides étalon, qui sont des huiles de silicone à 20cP et à 300cP. Les expériences correspondantes sont réalisées à la température ambiante de 25°C.

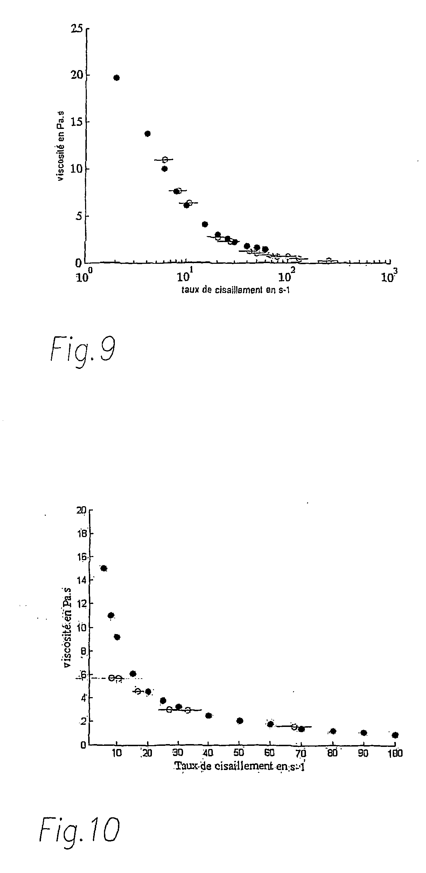

Les débits de micelles 1 sont compris entre 120 microlitres par heure et 10000 microlitres par heure, alors que les débits de fluide étalon sont compris entre 1 microlitre par heure et 10000 microlitres par heure. Etant donné que le fluide inconnu est non newtonien, on fait en sorte que la largeur _l_ de son écoulement soit inférieure à environ 20% de la largeur totale du microcanal. La courbe d'écoulement ainsi obtenue expérimentalement est reproduite ci-après, sur la figure 9 annexée.

EXEMPLE 4

Le même protocole que celui mis en oeuvre à l'exemple 3 est reproduit avec des micelles CpCl-NaSal à 8%, notées micelles 2. La courbe d'écoulement correspondante est reproduite ci-après, sur la figure 10 annexée.

On notera que, sur les figures illustrant les exemples 3 et 4, les symboles pleins correspondent aux résultats obtenus par un rhéomètre, alors que les symboles vides correspondent aux résultats obtenus par mise en oeuvre de l'installation conforme à l'invention. Ces deux courbes d'écoulement mettent en exergue le comportement rhéofluidifiant des micelles géantes. Par ailleurs, la concordance avec les résultats trouvés par un rhéomètre classique est satisfaisante.

EXEMPLE 5

On prépare, à partir de polymère polyoxyde d'éthylène de masse molaire 4 000 000, des solutions respectivement à 4% en masse et à 2% en masse. Ces solutions, qui forment un fluide non newtonien inconnu, sont associées à un fluide étalon qui est de l'huile de silicone 20cp.

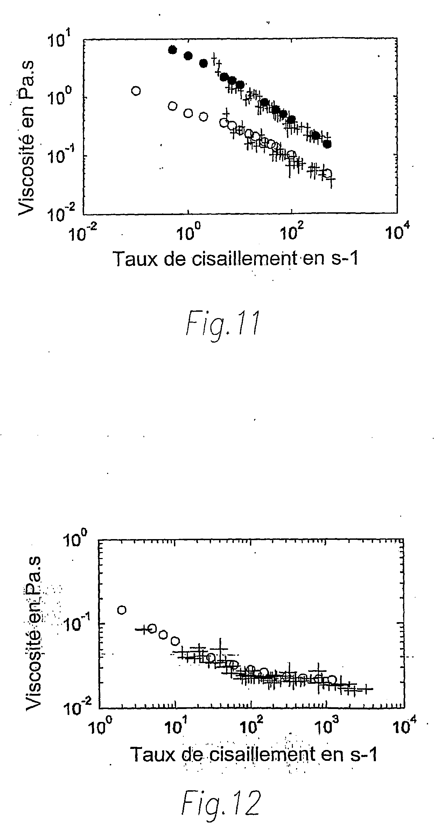

On applique le même protocole que celui mis en oeuvre à l'exemple 3, les courbes d'écoulement correspondantes étant reproduites ci-après, sur la figure 11 annexée. Sur celle-ci, les différentes croix correspondent aux mesures réalisées par mise en oeuvre de l'installation conforme à l'invention, alors que les cercles correspondent aux mesures faites sur un rhéomètre de l'état de la technique. Les cercles pleins correspondent à la solution à 4% en masse, alors que les cercles vides correspondent à la solution à 2% en masse.

Pour cette expérience, les microcanaux sont gravés dans une plaquette en PDMS, au-dessus de laquelle est rapportée une plaquette en verre, comme dans l'exemple décrit en référence à la figure 1. La température est égale à 24°C.

EXEMPLE 6

Le même protocole que celui de l'exemple 5 est reproduit avec un fluide inconnu qui est une émulsion polydisperse d'huile de silicone dans de l'eau, alors que le fluide étalon est une silicone de viscosité 100 cp. Sur la figure 12 annexée, les croix correspondent aux résultats obtenus par mise en oeuvre de l'installation conforme à l'invention, alors que les cercles correspondent aux expériences faites sur un rhéomètre du commerce.

EXEMPLE 7

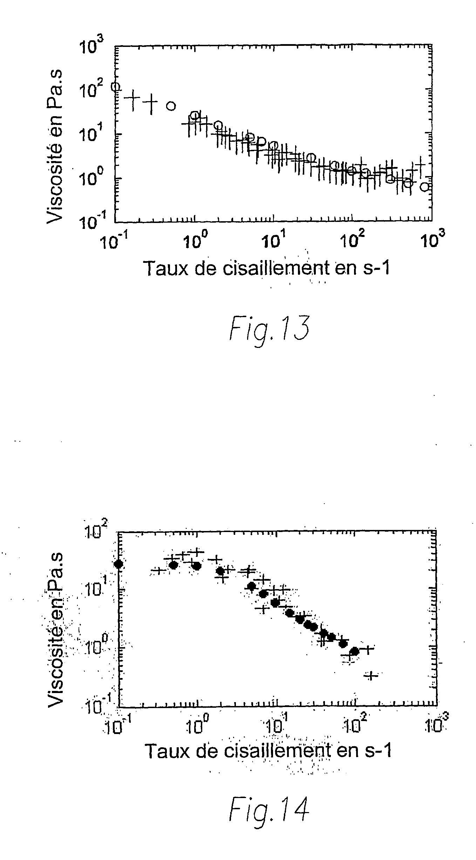

Le même protocole que celui mis en oeuvre à l'exemple 5 est reproduit avec un fluide inconnu qui est une mayonnaise commerciale, alors que le fluide étalon est une huile silicone de 100 cp. Sur la figure 13 annexée, les croix correspondent aux mesures faites par mise en oeuvre de l'installation conforme à l'invention, qui est analogue à celle des exemples 5 et 6, alors que les cercles correspondent aux expériences réalisées grâce à un rhéomètre du commerce.

On notera que, sur les figures 11 à 13 illustrant les exemples 5 à 7, il existe une concordance très satisfaisante entre les résultats obtenus grâce à un rhéomètre classique et ceux obtenus par la mise en oeuvre de l'invention. Par ailleurs, ces exemples 5 à 7 soulignent que l'invention trouve son application à des fluides très différents les uns des autres, et qu'elle permet en outre d'accéder à des viscosités et des taux de cisaillement présentant des valeurs très faibles.

EXEMPLE 8

On utilise des solutions de micelles géantes analogues à celles de l'exemple 3, à savoir micelles 1. On fait par ailleurs appel aux deux mêmes fluides étalons, l'expérience étant réalisée selon un protocole analogue à celui de cet exemple 3.

La difference essentielle, par rapport à cet exemple 3, réside dans un débit plus faible de ces micelles, qui est désormais compris entre 1 microlitre/heure et 10 000 microlitres/heure, alors que les débits de fluide étalon sont compris entre 1 microlitre/heure et 10 000 microlitres/heure. Ceci permet d'accéder à des valeurs particulièrement basses de viscosité et de taux de cisaillement.

On a conduit une série de mesures conformes à l'invention, en faisant appel à une autre installation conforme à l'invention, différente de celle des exemples précédents. En effet, dans cette installation, les microcanaux sont gravés, non plus dans le PDMS, mais dans une plaquette de verre. Cette dernière est elle-même surmontée d'une autre plaquette de verre, rapportée au-dessus de ces microcanaux.

Sur la figure 14 annexée, les croix correspondent aux mesures effectuées sur un rhéomètre de l'état de la technique, alors que les cercles pleins correspondent aux mesures réalisées avec les plaquettes verre-verre, décrites ci-dessus.

On constate que, même pour des valeurs très basses de taux de cisaillement, cette solution faisant intervenir des microcanaux gravés dans le verre est particulièrement avantageuse, étant donné qu'elle concorde de manière très satisfaisante avec les résultats obtenus par le rhéomètre classique. Ceci illustre le fait que, pour déterminer les caractéristiques rhéologiques d'un fluide fortement hydrophile, cette solution faisant intervenir le verre est particulièrement avantageuse.

En effet, dans le cas d'un fluide hydrophile, ce dernier est peu sujet à former des couches de déplétion au voisinage de parois en verre, même pour de très bas débits d'écoulement. En d'autres termes, grâce à l'utilisation du verre, il n'existe pas de gradient sensible de concentration du fluide inconnu, selon la largeur du canal, ce qui n'a pas tendance à fausser les mesures. En effet, l'eau contenue dans le fluide inconnu hydrophile n'a pas tendance à stagner de façon sensible au voisinage des débits.

**Revendications**

1. Procédé de détermination de caractéristiques rhéologiques d'un fluide inconnu ($F_1$), comprenant les étapes suivantes :

   - on fait s'écouler en parallèle, dans un microcanal d'écoulement (126), un fluide étalon ($F_2$), dont les caractéristiques rhéologiques sont connues, ainsi que ledit fluide inconnu ($F_1$), dont les caractéristiques rhéologiques sont à déterminer ;
   - on identifie au moins une donnée représentative d'une interface (I) entre ces deux fluides ($F_1$, $F_2$), dans ledit écoulement parallèle ; et
   - on détermine les caractéristiques rhéologiques du fluide inconnu, à partir de la ou de chaque donnée identifiée.

2. Procédé selon la revendication 1, **caractérisé en ce que** l'identification de la ou de chaque donnée représentative de l'interface (I) comprend une étape de visualisation de l'interface et de son voisinage (Z).

3. Procédé selon la revendication 1 ou 2, **caractérisé en ce qu'**on identifie la position de l'interface (I) .

4. Procédé selon la revendication 3, **caractérisé en ce qu'**on mesure la largeur (1) de l'écoulement du fluide inconnu ($F_1$) dans le microcanal d'écoulement (126).

5. Procédé selon la revendication 4, **caractérisé en ce qu'**on détermine de manière numérique la viscosité ($\eta_1$) dudit fluide inconnu ($F_1$), à partir de ladite largeur mesurée (1), en appliquant les équations suivantes :

$$(1) \qquad \frac{\partial u}{\partial x}(x,y,z)=0$$

$$(2_1) \qquad \frac{\partial P_i(x,y,z)}{\partial x}=\eta_i\left(\frac{\partial^2 u(y,z)}{\partial^2 y}+\frac{\partial^2 u(y,z)}{\partial^2 z}\right)$$

$$(2_2) \qquad \frac{\partial P_i(x,y,z)}{\partial y}=0$$

$$(2_3) \qquad \frac{\partial P_i(x,y,z)}{\partial z}=0$$

$$(3) \qquad P_i(x,y,z)=(P_{i-sortie}{*}x=P_{i-entr\acute{e}e}{*}(L-x))/L$$

$$(4) \qquad Q_i=\oint u_i(y,z)dydz$$

$$(5) \qquad u_1=u_2$$

$$(6) \qquad \eta_1\gamma_1=\eta_2\gamma_2$$

6. Procédé selon la revendication 4 ou 5, **caractérisé en ce que** le fluide inconnu est un fluide non newtonien et on restreint la largeur ($\underline{l}$) de ce fluide inconnu à une valeur inférieure à 20% de la largeur totale (L) du microcanal d'écoulement (126).

7. Procédé selon la revendication 6, **caractérisé en ce qu'**on restreint la largeur ($\underline{l}$) dudit écoulement en augmentant le rapport des débits entre le fluide étalon et le fluide inconnu.

8. Procédé selon la revendication 1 ou 2, **caractérisé en ce qu'**on identifie un champ de vitesses des deux fluides ($F_1$, $F_2$) de part et d'autre de l'interface (I).

9. Procédé selon la revendication 8, **caractérisé en ce qu'**on identifie le champ de vitesses en mesurant la vitesse de particules ($P_1$-$P_8$) dispersées dans lesdits fluides.

10. Procédé selon la revendication 8 ou 9, **caractérisé en ce qu'**on détermine la viscosité du fluide inconnu, en appliquant une équation de continuité du champ de contraintes à l'interface (I), notamment $\eta_1\gamma_1 = \eta_2\gamma_2$, où $\eta_1$ et $\gamma_1$ représentent la viscosité et le taux de cisaillement du fluide inconnu, et où $\eta_2$ et $\gamma_2$ représentent la viscosité et le taux de cisaillement du fluide étalon.

11. Procédé selon la revendication 5 ou 10, **caractérisé en ce qu'**on détermine une courbe d'écoulement du fluide inconnu à partir de la viscosité, en faisant varier le taux de cisaillement.

**12.** Procédé selon la revendication 11, **caractérisé en ce qu'**on modifie au moins un paramètre d'au moins l'écoulement du fluide inconnu, notamment le débit ou la pression, pour faire varier le taux de cisaillement.

**13.** Procédé selon l'une des revendications 8 ou 9, prise en combinaison avec la revendication 12, **caractérisé en ce qu'**on modifie le lieu où est identifié le champ de vitesses des deux fluides pour faire varier le taux de cisaillement.

**14.** Procédé selon l'une des revendications 1 à 13, **caractérisé en ce que** le fluide inconnu et le fluide étalon ne sont pas miscibles.

**15.** Procédé selon la revendication 14, **caractérisé en ce qu'**on ajoute au moins un composé tensio-actif dans au moins l'un parmi le fluide inconnu et le fluide étalon, notamment dans le fluide étalon, afin d'éviter la formation de gouttes dans l'écoulement parallèle.

**16.** Procédé selon l'une quelconque des revendications précédentes, **caractérisé en ce que** le fluide inconnu est un mélange d'au moins deux composants et on mélange ces au moins deux composants avant de faire s'écouler le fluide inconnu en parallèle avec le fluide étalon.

**17.** Procédé selon la revendication 16, **caractérisé en ce qu'**on introduit ces au moins deux composants dans un microcanal de mélange (34), gravé dans un matériau susceptible d'absorber un gaz de mélange, et on introduit ledit gaz de mélange dans ce microcanal de mélange.

**18.** Procédé selon la revendication 17, **caractérisé en ce que** le microcanal de mélange est gravé dans du PDMS (poly(diméthylsiloxane)), alors que le gaz de mélange est de l'air.

**19.** Installation pour la mise en oeuvre du procédé selon l'une quelconque des revendications précédentes, comprenant un dispositif (101) de détermination des caractéristiques rhéologiques du fluide inconnu, ce dispositif de détermination (101) comportant :

- un corps (102), formant notamment une plaquette ;
- un microcanal d'écoulement (126), ménagé dans le corps (102), propre à recevoir l'écoulement parallèle du fluide inconnu et du fluide étalon ;
- des moyens (104, 106) d'introduction de ces deux fluides dans le microcanal d'écoulement (126) ;
- des moyens (200) d'identification d'au moins une donnée représentative de l'interface (I) entre ces deux fluides, dans l'écoulement parallèle ; et
- des moyens (202) de détermination des caractéristiques rhéologiques du fluide inconnu, à partir de la ou de chaque donnée identifiée.

**20.** Installation selon la revendication 19, **caractérisée en ce que** les moyens d'introduction des deux fluides comprennent des premier (104) et second (106) microcanaux amont, débouchant dans le microcanal d'écoulement (126).

**21.** Installation selon la revendication 20, **caractérisée en ce que** les deux microcanaux amont (104, 106) sont reliés au microcanal d'écoulement (126) par l'intermédiaire d'une zone de jonction (124), dont la section (S) diminue en direction du microcanal d'écoulement (126), cette zone de jonction (124) présentant notamment une forme d'entonnoir.

**22.** Installation selon l'une quelconque des revendications 19 à 21, **caractérisée en ce que** les moyens d'identification comprennent une caméra (200).

**23.** Installation selon l'une des revendications 19 à 22, **caractérisée en ce que** les moyens de détermination comprennent un ordinateur (202).

**24.** Installation selon l'une des revendications 19 à 23, pour la mise en oeuvre du procédé selon l'une des revendications 16 à 18, **caractérisée en ce que** cette installation comprend également un dispositif de mélange (1), qui comporte :

- un corps (2), notamment en forme de plaquette, qui est réalisé en un matériau susceptible d'absorber un gaz de mélange ;
- des moyens (4, 6) d'amenée des composants destinés à former le fluide inconnu ;
- un microcanal (34) de mélange de ces composants ;

- des moyens (24) d'amenée dudit gaz de mélange dans le microcanal de mélange (34) ; et
- une sortie (36), mise en communication avec les moyens (104) d'introduction du fluide inconnu dans le microcanal d'écoulement (126).

**25.** Installation selon la revendication 24, **caractérisée en ce que** les moyens d'amenée des composants comprennent des microcanaux (4, 6) d'amenée de ces composants, qui débouchent dans le microcanal de mélange (34).

**26.** Installation selon la revendication 24 ou 25, **caractérisée en ce que** les moyens d'amenée du gaz de mélange comprennent un microcanal (24) d'amenée de ce gaz, qui débouche dans le microcanal de mélange (34).

**27.** Installation selon l'une des revendications 24 à 26, **caractérisée en ce que** le microcanal de mélange (34) est pourvu de replis (34$_1$) permettant de créer des chocs dans le mélange des composants, en vue de leur homogénéisation.

**28.** Installation selon l'une des revendications 24 à 27, **caractérisée en ce que** le corps (2) du dispositif de mélange (1) et/ou le corps (102) du dispositif de détermination (101) est (sont) réalisé(s) en PDMS (poly(diméthylsiloxane)).

**29.** Installation selon l'une des revendications 24 à 27, prise en combinaison avec la revendication 28, **caractérisée en ce que** le gaz de mélange est de l'air.

**30.** Installation selon l'une quelconque des revendications 24 à 29, **caractérisée en ce que** le corps (2) du dispositif de mélange (1) et le corps (102) du dispositif de détermination (101) sont séparés.

**31.** Installation selon l'une quelconque des revendications 19 à 27, ou selon la revendication 30, **caractérisée en ce que** le microcanal d'écoulement est bordé par des parois en verre.

**32.** Installation selon l'une quelconque des revendications 19 à 31, **caractérisée en ce que** la section transversale du microcanal d'écoulement (126) et/ou des microcanaux amont (104, 106) et/ou du microcanal de mélange (34) et/ou des microcanaux (4, 6) d'amenée des composants et/ou du microcanal (24) d'amenée du gaz de mélange est comprise entre 20 et 500 micromètres, de préférence entre 50 et 200 micromètres.

**33.** Procédé d'identification de composés chimiques, d'associations de composés chimiques ou de compositions présentant notamment des propriétés rhéologiques intéressantes, comprenant les étapes suivantes :

a) préparer au moins deux produits, associations ou compositions, différents,
b) mesurer au moins une caractéristique rhéologique par le procédé conforme à l'une des revendications 1 à 18, et/ou à l'aide de l'installation conforme à l'une des revendications 19 à 31,
c) identifier un produit, une association ou une composition présentant une propriété rhéologique intéressante.

**34.** Procédé selon la revendication précédente, **caractérisé en ce que** les composés, associations ou compositions sont des composés, associations ou compositions liquides pour des revêtements, par exemple des peintures, fluides pour l'exploitation des gisements de gaz ou de pétrole, pour les compositions phytosanitaires, pour le soin de la peau ou des cheveux, par exemple des shampooings, gels-douche, produits de maquillage, crèmes de soin de la peau, produits de protection solaire, ou pour les soins domestiques, par exemple pour des lessives liquides, ou pour des compositions détergentes pour surfaces dures.

**Claims**

**1.** A method of determining rheological characteristics of an unknown fluid (F$_1$), the method comprising the following steps:

• causing both a reference fluid (F$_2$) having known rheological characteristics and said unknown fluid (F$_1$) of rheological characteristics that are to be determined to flow in parallel in a flow microchannel (126);
• identifying at least one item of data representative of an interface (I) between said two fluids (F$_1$, F$_2$) in said parallel flow; and
• determining the rheological characteristics of the unknown fluid from the or each identified item of data.

2. A method according to claim 1, **characterized in that** identifying the or each item of data representative of the interface (I) comprises a step of viewing the interface and its vicinity (Z).

3. A method according to claim 1 or claim 2, **characterized in that** the position of the interface (I) is identified.

4. A method according to claim 3, **characterized in that** the width ($\ell$) of the flow of the unknown fluid ($F_1$) in the flow microchannel (126) is measured.

5. A method according to claim 4, **characterized in that** the viscosity ($\eta_1$) of said unknown fluid ($F_1$) is determined numerically from said measured width ($\ell$), by applying the following equations:

$$(1) \quad \frac{\partial u}{\partial x}(x,y,z)=0$$

$$(2_1) \quad \frac{\partial P_i(x,y,z)}{\partial x}=\eta_i\left(\frac{\partial^2 u(y,z)}{\partial^2 y}+\frac{\partial^2 u(y,z)}{\partial^2 z}\right)$$

$$(2_2) \quad \frac{\partial P_i(x,y,z)}{\partial y}=0$$

$$(2_3) \quad \frac{\partial P_i(x,y,z)}{\partial z}=0$$

$$(3) \quad P_i(x,y,z) = (P_{i-out}*x = P_{i-in}*(L-x))/L$$

$$(4) \quad Q=\oint u_i(y,z)dydz$$

$$(5) \quad u_1 = u_2$$

$$(6) \quad \eta_1\gamma_1 = \eta_2\gamma_2$$

6. A method according to claim 4 or claim 5, **characterized in that** the unknown fluid is a non-Newtonian fluid and the width ($\ell$) of said unknown fluid is kept down to a value that is less than 20% of the total width (L) of the flow microchannel (126).

7. A method according to claim 6, **characterized in that** the width ($\ell$) of said flow is kept down by increasing the ratio of the flow rates between the reference fluid and the unknown fluid.

8. A method according to claim 1 or claim 2, **characterised in that** velocity fields of the two fluids ($F_1$, $F_2$) are identified on either side of the interface (I) .

9. A method according to claim 8, **characterized in that** the velocity fields are identified by measuring the velocities of particles ($P_1$-$P_8$) dispersed in said fluids.

10. A method according to claim 8 or claim 9, **characterized in that** the viscosity of the unknown fluid is determined by applying an equation for stress field continuity at the interface (I), in particular $\eta_1\gamma_1 = \eta_2\gamma_2$, where $\eta_1$ and $\gamma_1$ represent the viscosity and the shear rate of the unknown fluid and where $\eta_2$ and $\gamma_2$ represent the viscosity and the shear rate of the reference fluid.

11. A method according to claim 5 or claim 10, **characterized in that** a curve for the flow of the unknown fluid is determined from the viscosity, by varying the shear rate.

**12.** A method according to claim 11, **characterized in that** at least one parameter of at least the flow of the unknown fluid is modified, and in particular the flow rate or the pressure, in order to cause the shear rate to vary.

**13.** A method according to claim 8 or claim 9, taken in combination with claim 12, **characterized in that** the places at which the velocity fields of the two fluids are identified are modified in order to vary the shear rate.

**14.** A method according to any one of claims 1 to 13, **characterized in that** the unknown fluid and the reference fluid are not miscible.

**15.** A method according to claim 14, **characterized in that** at least one wetting agent is added to at least one of the unknown fluid and the reference fluid, and in particular to the reference fluid, in order to avoid drops forming in the parallel flow.

**16.** A method according to any preceding claim, **characterized in that** the Unknown fluid is a mixture of at least two components, and said at least two components are mixed together prior to causing the unknown fluid to flow in parallel with the reference fluid.

**17.** A method according to claim 16, **characterized in that** said at least two components are introduced into a mixer microchannels (34) etched in a material suitable for absorbing a mixer gas, and said mixer gas is introduced into said mixer microchannel.

**18.** A method according to claim 17, **characterized in that** the mixer microchannel is etched in poly(dimethylsiloxane) (PDMS), and the mixer gas is air.

**19.** An installation for implementing the method according to any preceding claim, the installation comprising a device (101) for determining rheological characteristics of the unknown fluid, the determination device (101) comprising:

- a body (102), in particular forming a plate;
- a flow microchannel (126) formed in the body (102) and suitable for receiving the parallel flow of the unknown fluid and of the reference fluid;
- means (104, 106) for introducing said two fluids into the flow microchannel (126);
- means (200) for identifying at least one item of data representative of the interface (I) between said two fluids in the parallel flow; and
- means (202) for determining rheological characteristics of the unknown fluid, from the or each identified data item.

**20.** An installation according to claim 19, **characterized in that** the means for introducing the two fluids comprise first and second upstream microchannels (104, 106) opening out into the flow microchannel (126).

**21.** An installation according to claim 20, **characterized in that** the two upstream microchannels (104, 106) are connected to the flow microchannel (126) via a junction zone (124) of section (S) that decreases going towards the flow microchannel (126), said junction zone (124) presenting a funnel shape, in particular.

**22.** An installation according to any one of claims 19 to 21, **characterized in that** the identification means comprise a camera (200).

**23.** An installation according to any one of claims 19 to 22, **characterized in that** the determination means comprise a computer (202).

**24.** An installation according to any one of claims 19 to 23, for implementing the method according to any one of claims 16 to 18, the installation being **characterized in that** it also comprises a mixer device (1) comprising:

- a body (2), in particular in the form of a plate, made of a material that is suitable for absorbing a mixer gas;
- feed means (4, 6) for feeding components for forming the unknown fluid;
- a mixer microchannel (34) for mixing said components;
- feed means (24) for feeding said mixer gas into the mixer microchannel (34); and
- an outlet (36) put into communication with the means (104) for introducing the unknown fluid into the flow microchannel (126).

**25.** An installation according to claim 24, **characterized in that** the component feed means comprise microchannels (4, 6) for feeding the components that open out into the mixer microchannel (34).

**26.** An installation according to claim 24 or claim 25, **characterized in that** the mixer gas feed means comprise a microchannel (24) for feeding said gas that opens out into the mixer microchannel (34).

**27.** An installation according to any one of claims 24 to 26, **characterized in that** the mixer microchannel (34) is provided with bends ($34_1$) enabling shocks to be created in the component mixer, in order to make them homogenous.

**28.** An installation according to any one of claims 24 to 27, **characterized in that** the body (2) of the mixer device (1) and/or the body (102) of the determination device (101) is/are made of (poly(dimethylsiloxane) (PDMS)).

**29.** An installation according to any one of claims 24 to 27, taken in combination with claim 28, **characterized in that** the mixer gas is air.

**30.** An installation according to any one of claims 24 to 29, **characterized in that** the body (2) of the mixer device (1) and the body (102) of the determination device (101) are separate.

**31.** An installation according to any one of claims 19 to 27, or according to claim 30, **characterized in that** the flow microchannel is bordered by walls made of glass.

**32.** An installation according to any one of claims 19 to 31, **characterized in that** the cross-section of the flow microchannel (126), and/or of the upstream microchannels (104, 106), and/or of the mixer microchannel (34), and/or of the component feed microchannels (4, 6), and/or of the mixer gas feed microchannel (24) lies in the range 20 $\mu$m to 500 $\mu$m, and preferably in the range 50 $\mu$m to 200 $\mu$m.

**33.** A method of identifying chemical compounds, associations of chemical compounds, or compositions, in particular those that present rheological properties of interest, the method comprising the following steps:

a) preparing at least two different compounds, associations, or compositions;
b) measuring at least one rheological characteristic by the method in accordance with any one of claims 1 to 18, and/or with the help of the installation in accordance with any one of claims 19 to 31; and
c) identifying a compound, association, or composition presenting a rheological property of interest.

**34.** A method according to the preceding claim, **characterized in that** the compounds, associations, or compositions are liquid compounds, associations, or compositions for coatings, e.g. paints, working fluids for gas or oil deposits, for phytosanitary compositions, for care of the skin or the hair, e.g. shampoos, shower gels, makeup, skin care creams, sunscreens, or for home care, e.g. washing liquids, or for detergent compositions for hard surfaces.

**Patentansprüche**

**1.** Verfahren zur Bestimmung der rheologischen Eigenschaften eines unbekannten Fluids ($F_1$), das die folgenden Schritte umfasst:

- man lässt in einem Strömungsmikrokanal (126) parallel ein Vergleichsfluid ($F_2$), dessen rheologische Eigenschaften bekannt sind, sowie das unbekannte Fluid ($F_1$), dessen rheologische Eigenschaften zu bestimmen sind, strömen;
- man identifiziert mindestens eine repräsentative Größe einer Grenzfläche (I) zwischen diesen zwei Fluiden ($F_1$, $F_2$) in der parallelen Strömung; und
- man bestimmt die rheologischen Eigenschaften des unbekannten Fluids aus der oder jeder identifizierten Größe.

**2.** Verfahren nach Anspruch 1, **dadurch gekennzeichnet, dass** die Identifizierung der oder jeder repräsentativen Größe der Grenzfläche (I) einen Schritt der Visualisierung der Grenzfläche und ihrer Umgebung (Z) umfasst.

**3.** Verfahren nach Anspruch 1 oder 2, **dadurch gekennzeichnet, dass** die Position der Grenzfläche (I) identifiziert wird.

4. Verfahren nach Anspruch 3, **dadurch gekennzeichnet, dass** man die Breite (1) der Strömung des unbekannten Fluids ($F_1$) in dem Strömungsmikrokanal (126) gemessen wird.

5. Verfahren nach Anspruch 4, **dadurch gekennzeichnet, dass** in numerischer weise die Viskosität ($\eta_1$) des unbekannten Fluids ($F_1$) aus der gemessenen Breite (1) bestimmt wird, indem die folgenden Gleichungen angewandt werden:

$$(1) \qquad \frac{\partial u}{\partial x}(x,y,z) = 0$$

$$(2_1) \qquad \frac{\partial P_i(x,y,z)}{\partial x} = \eta_i \left( \frac{\partial^2 u(y,z)}{\partial^2 y} + \frac{\partial^2 u(y,z)}{\partial^2 z} \right)$$

$$(2_2) \qquad \frac{\partial P_i(x,y,z)}{\partial y} = 0$$

$$(2_3) \qquad \frac{\partial P_i(x,y,z)}{\partial z} = 0$$

$$(3) \qquad P_i(x,y,z) = (P_{i-sortie} * x = P_{i-entrée} * (L-x))/L$$

$$(4) \qquad Q_i = \oint u_i(y,z)\,dy\,dz$$

$$(5) \qquad u_1 = u_2$$

$$(6) \qquad \eta_1 \gamma_1 = \eta_2 \gamma_2$$

6. Verfahren nach Anspruch 4 oder 5, **dadurch gekennzeichnet, dass** das unbekannte Fluid ein nicht Newton'sches Fluid ist und die Breite (1) dieses unbekannten Fluids auf einen Wert kleiner als 20% der Gesamtbreite (L) des Strömungsmikrokanals (126) beschränkt wird.

7. Verfahren nach Anspruch 6, **dadurch gekennzeichnet, dass** die Breite (1) der Strömung beschränkt wird, indem das Verhältnis der Durchflüsse des Vergleichsfluids und des unbekannten Fluids erhöht wird.

8. Verfahren nach Anspruch 1 oder 2, **dadurch gekennzeichnet, dass** ein Geschwindigkeitsfeld der zwei Fluide ($F_1$, $F_2$) beidseitig der Grenzfläche (I) identifiziert wird.

9. Verfahren nach Anspruch B, **dadurch gekennzeichnet, dass** das Geschwindigkeitsfeld identifiziert wird, indem die Geschwindigkeit der Partikel ($P_1$-$P_8$) gemessen wird, die in den Fluiden verteilt sind.

10. Verfahren nach Anspruch 8 oder 9, **dadurch gekennzeichnet, dass** die Viskosität des unbekannten Fluids bestimmt wird, indem eine Kontinuitätsgleichung des Spannungsfelds an der Grenzfläche (I) angewendet wird, namentlich $\eta_1 \gamma_1 = \eta_2 \gamma_2$ wobei $\eta_1$ und $\gamma_1$ die Viskosität und den Scherungsgrad des unbekannten Fluids darstellen und wobei $\eta_2$ und $\gamma_2$ die Viskosität und den Scherungsgrad der Vergleichsflüssigkeit darstellen.

11. Verfahren nach Anspruch 5 oder 10, **dadurch gekennzeichnet, dass** eine Strömungskurve des unbekannten Fluids aus der Viskosität bestimmt wird, indem der Scherungsgrad variiert wird.

**12.** Verfahren nach Anspruch 11, **dadurch gekennzeichnet, dass** mindestens ein Parameter mindestens der Strömung des unbekannten Fluids, insbesondere der Durchfluss oder der Druck modifiziert werden, um den Scherungsgrad zu variieren.

**13.** Verfahren nach einem der Ansprüche 8 oder 9, in Kombination mit dem Anspruch 12, **dadurch gekennzeichnet, dass** der Ort, an dem das Geschwindigkeitsfeld der zwei Fluide identifiziert wird, modifiziert wird, um den Scherungsgrad zu variieren.

**14.** Verfahren nach einem der Ansprüche 1 bis 13, **dadurch gekennzeichnet, dass** das unbekannte Fluid und das Vergleichsfluid nicht mischbar sind.

**15.** Verfahren nach Anspruch 14, **dadurch gekennzeichnet, dass** mindestens eine tensioaktive Verbindung in das unbekannte Fluid und/oder das Vergleichsfluid, insbesondere in das Vergleichsfluid, zugefügt wird, um die Bildung von Tröpfchen in der parallelen Strömung zu vermeiden.

**16.** Verfahren nach einem beliebigen der vorhergehenden Ansprüche, **dadurch gekennzeichnet, dass** das unbekannte Fluid eine Mischung von mindestens zwei Komponenten ist und diese mindestens zwei Komponenten gemischt werden, bevor das unbekannte Fluid parallel mit dem Vergleichsfluid strömen gelassen wird.

**17.** Verfahren nach Anspruch 16, **dadurch gekennzeichnet, dass** diese mindestens zwei Komponenten in einen Mischungsmikrokanal (34) eingeführt werden, der in ein Material eingraviert ist, das geeignet ist, ein Mischgas zu absorbieren, und das Mischgas in den Mischmikrokanal eingeführt wird.

**18.** verfahren nach Anspruch 17, **dadurch gekennzeichnet, dass** der Mischmikrokanal in PDMS (Poly(dimethylsiloxan)) eingraviert ist, wobei das Mischgas Luft ist.

**19.** Einrichtung zur Durchführung des Verfahrens nach einem beliebigen der vorhergehenden Ansprüche, umfassend eine Vorrichtung (101) zur Bestimmung der rheologischen Eigenschaften des unbekannten Fluids, wobei diese Vorrichtung (101) zur Bestimmung einschließt:

- einen Körper (102), der insbesondere eine Platte bildet;
- einen Strömungsmikrokanal (126), der in den Körper (102) eingearbeitet ist und geeignet ist, die parallele Strömung des unbekannten Fluids und des Vergleichsfluids aufzunehmen;
- Mittel (104, 106) zum Einführen dieser beiden Fluide in den Strömungsmikrokanal (126);
- Mittel (200) zur Identifizierung mindestens einer repräsentativen Größe der Grenzschicht (I) zwischen diesen zwei Fluiden in der parallelen Strömung; und
- Mittel (202) zur Bestimmung der rheologischen Eigenschaften des unbekannten Fluids aus der oder jeder identifizierten Größe.

**20.** Einrichtung nach Anspruch 19, **dadurch gekennzeichnet, dass** die Mittel zur Einführung der zwei Fluide einen ersten (104) und zweiten (106) stromaufwärts liegenden Mikrokanal umfassen, die in den Strömungsmikrokanal (126) einmünden.

**21.** Einrichtung nach Anspruch 20, **dadurch gekennzeichnet, dass** die zwei stromaufwärts liegenden Mikrokanäle (104, 106) an den Strömungsmikrokanal (126) über eine Verbindungszone (124) angeschlossen sind, deren Querschnitt (S) sich in Richtung des Strömungsmikrokanals (126) verringert, wobei diese Verbindungszone (124) insbesondere die Form eines Trichters aufweist.

**22.** Einrichtung nach einem beliebigen der Ansprüche 19 bis 21, **dadurch gekennzeichnet, dass** die Mittel zur Identifizierung eine Kamera (200) umfassen.

**23.** Einrichtung nach einem der Ansprüche 19 bis 22, **dadurch gekennzeichnet, dass** die Mittel zur Bestimmung einen Rechner (202) umfassen.

**24.** Einrichtung nach einem der Ansprüche 19 bis 23 für die Durchführung des Verfahrens nach einem der Ansprüche 16 bis 18, **dadurch gekennzeichnet, dass** diese Einrichtung gleichfalls eine Mischvorrichtung (1) umfasst, die aufweist:

- einen Körper (2), insbesondere in Form einer Platte, die aus einem Material hergestellt ist, das geeignet ist, ein Mischgas zu absorbieren;
- Mittel (4, 6) zur Zuleitung von Komponenten, die vorgesehen sind, das unbekannte Fluid zu bilden;
- einen Mikrokanal (34) zum Mischen dieser Komponenten;
- Mittel (24) zur Zuführung des Mischgases in den Mischkanal (34); und
- einen Ausgang (36), der in Verbindung mit den Mitteln (104) zur Einführung des unbekannten Fluids in den Strömungsmikrokanal (126) steht.

25. Einrichtung nach Anspruch 24, **dadurch gekennzeichnet, dass** die Mittel zur Zuleitung der Komponenten Mikrokanäle (4, 6) für die Zufuhr dieser Komponenten aufweisen, die in den Mischmikrokanal (34) münden.

26. Einrichtung nach Anspruch 24 oder 25, **dadurch gekennzeichnet, dass** die Mittel zur Zuführung des Mischgases einen Mikrokanal (24) für die Zuführung dieses Gases aufweisen, der in den Mischmikrokanal (34) mündet.

27. Einrichtung nach einem der Ansprüche 24 bis 26, **dadurch gekennzeichnet, dass** der Mischmikrokanal (34) mit Umlenkungen ($34_1$) versehen ist, die gestatten, in der Mischung der Komponenten Stöße zu ihrer Homogenisierung zu erzeugen.

28. Einrichtung nach einem der Ansprüche 24 bis 27, **dadurch gekennzeichnet, dass** der Körper (2) der Mischvorrichtung (1) und/oder Körper (102) der Vorrichtung zur Bestimmung (101) aus PDMS (Poly(dimethylsiloxane)) hergestellt ist (sind).

29. Einrichtung nach einem der Ansprüche 24 bis 27, in Kombination mit Anspruch 28, **dadurch gekennzeichnet, dass** das Mischgas Luft ist.

30. Einrichtung nach einem beliebigen der Ansprüche 24 bis 29, **dadurch gekennzeichnet, dass** der Körper (2) der Mischvorrichtung (1) und der Körper (102) der Vorrichtung zur Bestimmung (101) getrennt sind.

31. Einrichtung nach einem beliebigen der Ansprüche 19 bis 27 oder nach Anspruch 30, **dadurch gekennzeichnet, dass** der Strömungsmikrokanal von Glaswänden eingefasst ist.

32. Einrichtung nach einem beliebigen der Ansprüche 24 bis 31, **dadurch gekennzeichnet, dass** der Querschnitt des Strömungsmikrokanals (126) und/oder der stromaufwärts liegenden Mikrokanäle (104, 106) und/oder des Mischmikrokanals (34) und/oder der Mikrokanäle (4, 6) zur Zuleitung der Komponenten und/oder des Mikrokanals (24) zur Zuführung des Mischgases zwischen 20 und 500 Mikrometern liegt, vorzugsweise zwischen 50 und 200 Mikrometern.

33. Verfahren zur Identifizierung von chemischen Verbindungen, von Assoziationen von chemischen Verbindungen oder von Zusammensetzungen, die insbesondere interessante rheologische Eigenschaften aufweisen, folgende Schritte umfassend:

a) Aufbereiten von mindestens zwei unterschiedlichen Produkten, Assoziationen oder Zusammensetzungen,
b) Messen mindestens einer rheologischen Eigenschaft mit dem Verfahren entsprechend einem der Ansprüche 1 bis 18 und/oder mit Hilfe der Einrichtung entsprechend einem der Ansprüche 19 bis 31,
c) Identifizieren eines Produkts, einer Assoziation oder einer Zusammensetzung, die eine interessante rheologische Eigenschaft aufweist.

34. Verfahren nach dem vorhergehenden Anspruch, **dadurch gekennzeichnet, dass** die Verbindungen, Assoziationen oder Zusammensetzungen flüssige Verbindungen, Assoziationen oder Zusammensetzungen für Beschichtungen, beispielsweise Anstrichmittel, Fluide für die Ausbeutung von Gas- oder Erdölvorkommen, für die Pflanzenschutzzusammensetzungen, für die Haut- und Haarpflege, beispielsweise Shampoos, Duschgels, Schminkprodukte, Hautpflegecremes, Sonnenschutzprodukte oder für die häusliche Pflege, beispielsweise für flüssige Waschmittel oder für Reinigungszusammensetzungen für harte Oberflächen sind.

Fig.1

Fig.1A

Fig.2

Fig.3

Fig.6

Fig.4

Fig.5A

Fig.5B

Fig. 7

Fig. 8

Fig.9

Fig.10

*Fig.11*

*Fig.12*

Fig. 13

Fig. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5327778 A
- WO 03008936 A
- US 5447440 A
- WO 0239090 A
- US 3808877 A

**Littérature non-brevet citée dans la description**

- **Stéphane COLIN.** Microfluidique (Traité EGEM série Microsystèmes). Hermès Science Publications